# EUROPEAN PATENT SPECIFICATION

(11) **EP 3 476 689 B1**
(45) Date of publication and mention of the grant of the patent: **23.12.2020**
(21) Application number: 17198660.7
(22) Date of filing: 26.10.2017
(51) Int. Cl.: B61K 7/20, B60T 3/00, B61L 5/06, B61L 7/06, B60T 7/18, B61L 5/10, B61L 5/04

(54) **SAFETY SYSTEM AND METHOD FOR A RAIL VEHICLE SITE AND APPARATUS FOR MOVING A SCOTCH ELEMENT OF A SAFETY SYSTEM**
SICHERHEITSSYSTEM UND VERFAHREN FÜR EINEN SCHIENENFAHRZEUGSTANDORT UND VORRICHTUNG ZUM BEWEGEN EINES SPERRELEMENTS EINES SICHERHEITSSYSTEMS
SYSTÈME ET PROCÉDÉ DE SÉCURITÉ POUR UN SITE DE VÉHICULE FERROVIAIRE ET APPAREIL PERMETTANT DE DÉPLACER UN ÉLÉMENT À COULISSE D'UN SYSTÈME DE SÉCURITÉ

(43) Date of publication of application: 01.05.2019
(73) Proprietor: Bombardier Transportation GmbH, 10785 Berlin (DE)
(72) Inventor: PETERMAN, Vlademir, London, HA9 9AW (GB)
(74) Representative: Alatis

(56) References cited:
- CA-A1- 2 297 384
- CN-Y- 200 995 697
- GB-A- 721 461
- JP-A- H11 321 590
- JP-A- S52 152 006
- JP-A- 2008 207 745
- KR-A- 20120 049 749
- KR-A- 20150 018 193
- US-A- 2 771 162
- US-A- 3 793 964
- US-A- 4 080 904
- US-A- 5 096 021
- US-A1- 2005 133 315

## Description

### TECHNICAL FIELD OF THE INVENTION

The present invention relates to a safety system for a rail vehicle site and apparatus for moving a scotch element of a safety system.

### BACKGROUND ART

During service and maintenance of a rail vehicle scotches are used to keep the rail vehicle in a stop position such that staff can work on the rail vehicle. Existing so-called "Depot Protection" or "DP" safety systems control a shed signalling system and monitor the staff working on the rail vehicle. The staff is equipped with electronic keys to track their working location. The use of scotches is also known for road vehicles.

EP 1 764 275 A1 discloses a scotch for a tyre of a road vehicle in a loading/unloading bay. The scotch is fixed to a metal cylinder that is extended from a lengthwise guide that also serves to position the vehicle in relation to the bay. The cylinder's actuating mechanism is in the form of a power cylinder linked to a vehicle tyre detector and it deploys the scotch to engage with the tyre surface and prevent any movement of the vehicle relative to the bay during loading/unloading operations. However, this mechanism is only applicable for road vehicles. In addition, the scotch can only be moved in a longitudinal direction of the vehicle.

KR 2012 0049749 A discloses a safety system for a rail vehicle site with an apparatus for moving a scotch element comprising a rotating lever, the safety system further comprising a sensor detecting the current scotch position and a control unit, which controls based on an input from the sensor the lighting of a lamp in a display unit in order to indicate the state of the scotch element.

### SUMMARY OF THE INVENTION

The technical problem underlying the present invention consisted in developing a safety system for a rail vehicle site, wherein the safety system allows for a safer workplace for technical staff and an apparatus for moving a scotch element of a safety system, wherein the apparatus has a simple structure.

The technical problem outlined above is solved by the safety system according to claim 1 and the apparatus defined in claim 7. The depending claims define further developments of the invention.

According to the invention the objectives are solved by a safety system for a rail vehicle site, the rail vehicle site comprising at least one rail vehicle track with two rails, at least one rail vehicle, and the safety system comprising at least one scotch element for at least one wheel of the rail vehicle. The safety system further comprises at least one sensor, at least one control unit and at least one apparatus for moving the scotch element, wherein a safety condition on the rail vehicle site is observable by the sensor, a movement of the scotch element on one of the rails of the rail vehicle track is controllable by the control unit and the movement of the scotch element is dependent on the safety condition.

The advantage of the inventive solution is that the rail vehicle site is a safer workplace for technical staff. The safety system comprising the apparatus, the control unit and the sensors provides higher safety than conventional shed signalling systems.

One advantageous development of the invention is that the scotch element is at the wheel if a safety condition is unfulfilled and the scotch element is away from the wheel if a safety condition is fulfilled. This ensures that the train is in a stop (motionless) position when the safety condition is not fulfilled and the train is in a free to move position if the safety condition is fulfilled.

Preferably, the movement of the scotch element is activated by at least one human and/or computational supervisor. Thereby, the movement of the scotch element can be initiated centrally or with the additional safety of several coordinating supervisors.

The safety condition can be a safe position of a crane in a depot, in particular a position of the crane in a corner of the depot, and/or a safe position of at least one person, in particular a position away from the rail vehicle. The safety condition can also be an obstacle-free track and/or at least one removed ladder. The safety condition may as well be an open door at the rail vehicle track of the depot and/or at least one closed door of the rail vehicle and/or at least one closed vehicle side skirt of the rail vehicle. All of these safety conditions ensure that the scotch can be removed and the train can be moved.

The objectives are further solved by an apparatus for moving a scotch element of a safety system, the apparatus comprising a base element having the same height as a rail and being fixed in parallel with the rail, a sliding plate for the scotch element, at least one first cylinder in a direction perpendicular to the rail, and at least one second cylinder in a direction parallel to the rail. This structure is simple and easy to manufacture. The apparatus is a link between the control unit and the rail vehicle. It is a physical holding device preventing movement of the rail vehicle in event of a failure of the rail vehicle and/or human error failures.

Preferably, the scotch element is connected to a piston rod of the second cylinder by a quick release mechanism. The quick-release mechanism allows for removing the second cylinder from the rail when the scotch element is at the wheel.

Furthermore, an electromagnetic locking device secures the second cylinder along the rail. This prevents any torque and/or twist of the first and second cylinders.

The apparatus may be moveable along the rail for a predetermined distance and the apparatus is in particular moveable on at least one guide rail parallel to the rail of the rail vehicle track. Thereby, the position of the apparatus can be adjusted for different wheel positions of different train types.

According to another aspect of the invention, there is provided a safety method for a rail vehicle site, the rail vehicle site comprising at least one rail vehicle track and a safety system comprising at least one scotch element for at least one wheel of a rail vehicle. The method is characterized in that a safety condition on the rail vehicle site is observed by at least one sensor of the safety system connected to a control unit of the safety system and an apparatus of the safety system controlled by the control unit moves the scotch element on a rail of the rail vehicle track based on the safety condition. The method is particularly adapted to the apparatus and safety systems described hereinbefore.

### BRIEF DESCRIPTION OF THE FIGURES

Other advantages and features of the invention will then become more clearly apparent from the following description of a specific embodiment of the invention given as a non-restrictive example only and represented in the accompanying drawings in which:
- Fig. 1 shows a schematic structure of an inventive safety system,
- Fig. 2 is a diagrammatic side view of an inventive apparatus for moving a scotch element, wherein the scotch element is in a first position,
- Fig. 3 is a diagrammatic side view of an inventive apparatus for moving a scotch element, wherein the scotch element in a second position, and
- Fig. 4 is a diagrammatic top view of an inventive apparatus for moving a scotch element, wherein the scotch element in a third position.

### DETAILED DESCRIPTION OF A PREFERRED EMBODIMENT

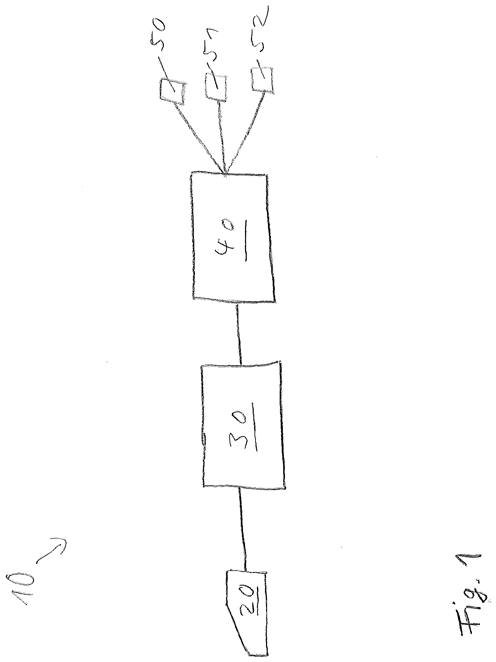

Fig. **1** shows a safety system **10** according to the invention comprising a scotch element **20,** an apparatus **30** for moving the scotch element **20,** a control unit **40** and sensors **50, 51** and **52.** The safety system **10** can comprise less than three sensors or more than three sensors. The sensors **50, 51** and **52** are connected to the control unit **40** via electrical lines or a wireless connection. The control unit **40** is connected to the apparatus **30** as well via electrical lines or a wireless connection.

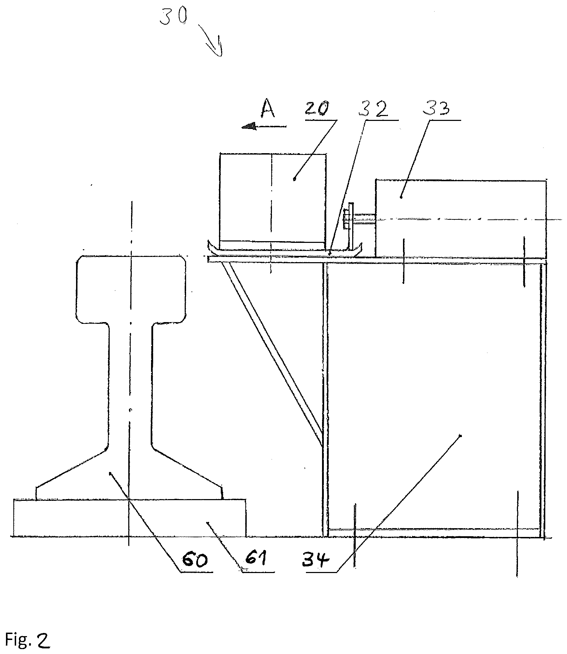

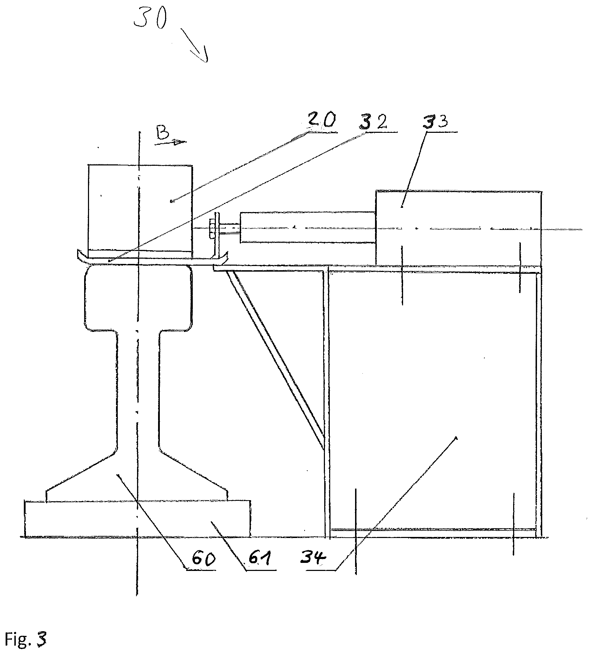

Figs. **2****,** **3** and **4** show an apparatus **30** for moving the scotch element **20.** The apparatus **30** is a mechanical actuator and comprises a sliding plate **32,** two first cylinders **33** and a base element **34.** A rail **60** and a track plate **61** of a rail vehicle site are also shown in Figs. **2** and **3****.** Other parts of the rail vehicle site are not shown.

The base element **34** is a cuboid fastened to a ground of the rail vehicle site, e.g. by runners or guide rails, in parallel with the rail **60.** The first cylinders **33** are preferably pneumatic cylinders fixed to the top of the base element **34.** Alternatively, the first cylinders **33** can be hydraulic cylinders. The first cylinders **33** are arranged perpendicular to the rail **60** and carry the sliding plate **32.** The sliding plate **32** is preferably made of a sheet metal and has a position parallel to the rail **60.** The sliding plate **32** carries the scotch element **20.**

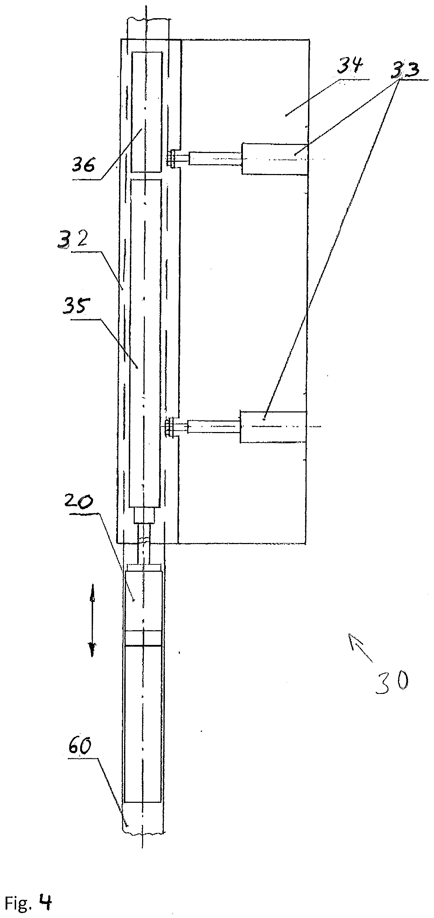

Fig. **4** additionally illustrates a second cylinder **35** and an electromagnetic locking device **36** of the apparatus **30.** In Fig. **4** only the rail **60** is shown as a part of the rail vehicle site. The second cylinder **35** is preferably a pneumatic cylinder but can be a hydraulic cylinder as well. The second cylinder **35** is mounted to the sliding plate **32** and positioned parallel to the rail **60** in alignment with the scotch element **20.** The scotch element **20** is connected to the second cylinder **35** by a quick release mechanism (not shown). The electromagnetic locking device **36** is positioned at an end of the second cylinder **35** opposite to the scotch element **20.**

When a wheel of a rail vehicle (not shown) is to be secured by the scotch element **20** the apparatus **30** is activated by the control unit **40** and carries out the following steps: The first cylinders **33** extend in a direction perpendicular to the rail **60,** thereby moving the sliding plate **32** with the scotch element **20** to a position above the rail **60** (Fig. **3**). In a next step, the electromagnetic lock **36** energizes, magnetically securing the sliding plate **32** on the rail or rail head **60.** Then the second cylinder **35** extends in a direction parallel to the rail **60** and moves the scotch element **20** off the sliding plate **32** towards the wheel of the rail vehicle. The scotch element **20** is now in a position shown in Fig. **4****.** Repair and maintenance work can be carried out safely.

Before removing the scotch element **20** from the wheel of the rail vehicle, the sensors **50, 51** and **52** and the control unit **40** have to detect if a safety condition is met, e.g. a safe stop position of a crane (not shown) in a closed rail vehicle site, e.g. a depot. If a predetermined safety condition is not met, the apparatus **30** is not activated. If the safety condition is met the control unit **40** activates the apparatus **30.** The apparatus **30** can be activated manually or automatically. The second cylinder **35** is activated, retracting the scotch element **20** on the sliding plate **32** and de-energizing the electromagnetic lock **36.** The sliding plate **32** is then moved in a direction perpendicular to the rail **60** towards the top of the base element **34.** If by any reasons (if a wheel is on the scotch element **20**) the scotch element **20** cannot be removed from the wheel by the second cylinder 35, the control unit **40** will flag an error (an over load protection is built in) and manual retraction will be required. The quick release mechanism between the second cylinder **35** and the scotch element **20** will be manually used to free a piston of the second cylinder **35** from the scotch element **20** stuck under the wheel. Then second cylinder **35** and the first cylinders **33** can be retracted in a home position and the scotch element **20** can be removed using a hammer. The end position of the scotch element **20** is shown in Fig. **2****.**

### Reference list:

- 10: Safety system
- 20: Scotch element
- 30: Apparatus
- 32: Sliding plate
- 33: First cylinder
- 34: Base element
- 35: Second cylinder
- 36: Electro-magnetic locking device
- 40: Control unit
- 50: Sensor
- 51: Sensor
- 52: Sensor
- 60: Rail
- 61: Track plate

## Claims

1. Safety system (10) for a rail vehicle site, the rail vehicle site comprising
- at least one rail vehicle track with two rails (60),
- at least one rail vehicle, and
- the safety system (10)
wherein the safety system comprises at least one scotch element (20) for at least one wheel of the rail vehicle, at least one sensor (50, 51, 52), at least one control unit (40) and at least one apparatus (30) for moving the scotch element (20),
**characterized in that**
- a safety condition on the rail vehicle site is observable by the sensor (50, 51, 52), and if the safety condition is met the control unit (40) activates the apparatus (30),
- a movement of the scotch element (20) on one of the rails (60) of the rail vehicle track is controllable by the control unit (40) and
- the movement of the scotch element (20) is dependent on the safety condition.

2. Safety system (10) according to claim 1, wherein the scotch element (20) is at the wheel if the safety condition is unfulfilled and the scotch element (20) is away from the wheel if the safety condition is fulfilled.

3. Safety system (10) according to claim 1 or 2, wherein the apparatus (30) can be activated manually or automatically.

4. Safety system (10) according to claims 1 to 3, wherein the safety condition is a safe position of a crane in a depot, in particular a position of the crane in a corner of the depot, and/or a safe position of at least one person, in particular a position away from the rail vehicle.

5. Safety system (10) according to claims 1 to 4, wherein the safety condition is an obstacle-free track and/or at least one removed ladder.

6. Safety system (10) according to claims 1 to 5, wherein the safety condition is an open door at the rail vehicle track of the depot and/or at least one closed door of the rail vehicle and/or at least one closed vehicle side skirt of the rail vehicle.

7. Apparatus (30) for moving a scotch element (20) of a safety system (10) according to claims 1 to 6, the apparatus (30) comprising
- a cuboid base element (34) having the same height as a rail (60) and being fastened to a ground of the rail vehicle site and fixed in parallel with the rail (60),
**characterized in that**
the apparatus further comprises
- a sliding plate (32) that carries the scotch element (20),
- wherein the sliding plate (32) is carried by
at least one first pneumatic or hydraulic cylinder (33) in a direction perpendicular to the rail (60), and
- at least one second pneumatic or hydraulic cylinder (35) is mounted to the sliding plate (32) in a direction parallel to the rail (60) in alignment with the scotch element (20).

8. Apparatus (30) according to claim 7, wherein the scotch element (20) is connected to a piston rod of the second cylinder (35) by a quick release mechanism, wherein the quick release mechanism between the second cylinder (35) and the scotch element (20) is manually used to free a piston of the second cylinder (35) from the scotch element (20) stuck under the wheel.

9. Apparatus (30) according to claim 7 or 8, comprising an electromagnetic locking device (36) securing the second cylinder (35) along the rail (60).

10. Apparatus (30) according to claims 7 to 9, wherein the apparatus (30) is moveable along the rail (60) for a predetermined distance and the apparatus (30) is in particular moveable on at least one guide rail parallel to the rail (60) of the rail vehicle track.

11. Safety method for a rail vehicle site, the rail vehicle site comprising
- at least one rail vehicle track, and
- a safety system (10) comprising at least one scotch element (20) for at least one wheel of a rail vehicle,
**characterized in that**
- a safety condition on the rail vehicle site is observed by at least one sensor (50, 51, 52) of the safety system (10) connected to a control unit (40) of the safety system (10)
- an apparatus (30) of the safety system (10) controlled by the control unit moves the scotch element (20) on a rail of the rail vehicle track based on the safety condition.

## Patentansprüche

1. Sicherheitssystem (10) für einen Schienenfahrzeug-Standort, wobei der Schienenfahrzeug-Standort Folgendes umfasst:
- mindestens ein Schienenfahrzeug-Gleis mit zwei Schienen (60),
- mindestens ein Schienenfahrzeug, und
- das Sicherheitssystem (10), wobei das Sicherheitssystem mindestens ein Blockierelement (20) für mindestens ein Rad des Schienenfahrzeugs, mindestens einen Sensor (50, 51, 52), mindestens eine Steuereinheit (40) und mindestens eine Vorrichtung (30) zum Bewegen des Blockierelements (20) umfasst, **dadurch gekennzeichnet, dass**
- eine Sicherheitsbedingung am Schienenfahrzeug-Standort durch den Sensor (50, 51, 52) beobachtet werden kann, und wenn die Sicherheitsbedingung erfüllt ist, die Steuereinheit (40) die Vorrichtung (30) aktiviert,
- dass eine Bewegung des Blockierelements (20) auf einer der Schienen (60) des Schienenfahrzeug-Gleises durch die Steuereinheit (40) gesteuert werden kann und
- die Bewegung des Blockierelements (20) von der Sicherheitsbedingung abhängig ist.

2. Sicherheitssystem (10) nach Anspruch 1, wobei sich das Blockierelement (20) am Rad befindet, wenn die Sicherheitsbedingung nicht erfüllt ist, und das Blockierelement (20) vom Rad entfernt ist, wenn die Sicherheitsbedingung erfüllt ist.

3. Sicherheitssystem (10) nach Anspruch 1 bis 2, wobei die Vorrichtung (30) manuell oder automatisch aktiviert werden kann.

4. Sicherheitssystem (10) nach Anspruch 1 bis 3, wobei die Sicherheitsbedingung eine sichere Position eines Krans in einem Depot, insbesondere eine Position des Krans in einer Ecke des Depots, und/oder eine sichere Position mindestens einer Person, insbesondere einer vom Schienenfahrzeug entfernten Position ist.

5. Sicherheitssystem (10) nach Anspruch 1 bis 4, wobei die Sicherheitsbedingung ein hindernisfreies Gleis und/oder mindestens eine abgenommene Leiter ist.

6. Sicherheitssystem (10) nach Anspruch 1 bis 5, wobei die Sicherheitsbedingung eine offene Tür am Schienenfahrzeug-Gleis des Depots und/oder mindestens eine geschlossene Tür des Schienenfahrzeugs und/oder mindestens eine geschlossene Fahrzeugseitenschürze des Schienenfahrzeugs ist.

7. Vorrichtung (30) zum Bewegen eines Blockierelements (20) eines Sicherheitssystems (10) nach Anspruch 1 bis 6, wobei die Vorrichtung (30) Folgendes umfasst:
- ein quaderförmiges Basiselement (34), das die gleiche Höhe wie eine Schiene (60) hat und an einem Boden des Schienenfahrzeug-Standorts befestigt ist und parallel zur Schiene (60) fixiert ist, **dadurch gekennzeichnet, dass** die Vorrichtung ferner Folgendes umfasst:
- eine Gleitplatte (32), die das Blockierelement (20) trägt,
- wobei die Gleitplatte (32) von mindestens einem ersten pneumatischen oder hydraulischen Zylinder (33) in einer Richtung senkrecht zu der Schiene (60) getragen wird, und
- wobei mindestens ein zweiter pneumatischer oder hydraulischer Zylinder (35) an der Gleitplatte (32) in einer Richtung parallel zur Schiene (60) in Ausrichtung mit dem Blockierelement (20) angebracht ist.

8. Vorrichtung (30) nach Anspruch 7, wobei das Blockierelement (20) mit einer Kolbenstange des zweiten Zylinders (35) durch einen Schnelllösemechanismus verbunden ist, wobei der Schnelllösemechanismus zwischen dem zweiten Zylinder (35) und dem Blockierelement (20) manuell verwendet wird, um einen Kolben des zweiten Zylinders (35) von dem unter dem Rad festsitzenden Blockierelement (20) zu befreien.

9. Vorrichtung (30) nach Anspruch 7 oder 8, umfassend ein elektromagnetisches Verriegelungsgerät (36), das den zweiten Zylinder (35) entlang der Schiene (60) sichert.

10. Vorrichtung (30) nach den Ansprüchen 7 bis 9, wobei die Vorrichtung (30) entlang der Schiene (60) über eine vorbestimmte Strecke bewegbar ist und die Vorrichtung (30) insbesondere auf mindestens einer Führungsschiene parallel zur Schiene (60) des Schienenfahrzeug-Gleises bewegbar ist.

11. Sicherheitsverfahren für einen Schienenfahrzeug-Standort, wobei der Schienenfahrzeug-Standort Folgendes umfasst:
- mindestens ein Schienenfahrzeug-Gleis, und
- ein Sicherheitssystem (10), mindestens umfassend ein Blockierelement (20) für mindestens ein Rad eines Schienenfahrzeugs, **dadurch gekennzeichnet, dass**:
- eine Sicherheitsbedingung am Schienenfahrzeug-Standort durch mindestens einen Sensor (50, 51, 52) des Sicherheitssystems (10) beobachtet wird, der mit einer Steuereinheit (40) des Sicherheitssystems (10) verbunden ist,
- eine Vorrichtung (30) des Sicherheitssystems (10), die von der Steuereinheit gesteuert wird, das Blockierelement (20) auf einer Schiene des Schienenfahrzeug-Gleises basierend auf der Sicherheitsbedingung bewegt.

## Revendications

1. Système de sécurité (10) destiné à un site de véhicules ferroviaires, le site de véhicules ferroviaires comprenant
- au moins une voie pour véhicules ferroviaires comportant deux rails (60),
- au moins un véhicule ferroviaire, et
- le système de sécurité (10), le système de sécurité comprenant au moins un élément sabot d'arrêt (20) pour au moins une roue du véhicule ferroviaire, au moins un capteur (50, 51, 52), au moins une unité de commande (40) et au moins un appareil (30) destiné à déplacer l'élément sabot d'arrêt (20),
**caractérisé en ce que**
- une condition de sécurité sur le site de véhicules ferroviaires est observable par le capteur (50, 51, 52) et si la condition de sécurité est remplie, l'unité de commande (40) active l'appareil (30),
- un déplacement de l'élément sabot d'arrêt (20) sur l'un des rails (60) de la voie pour véhicules ferroviaires peut être commandé par l'unité de commande (40) et
- le déplacement de l'élément sabot d'arrêt (20) dépend de la condition de sécurité.

2. Système de sécurité (10) selon la revendication 1, dans lequel l'élément sabot d'arrêt (20) se trouve au niveau de la roue si la condition de sécurité n'est pas remplie et l'élément sabot d'arrêt (20) est éloigné de la roue si la condition de sécurité est remplie.

3. Système de sécurité (10) selon la revendication 1 ou 2, dans lequel l'appareil (30) peut être activé manuellement ou automatiquement.

4. Système de sécurité (10) selon les revendications 1 à 3, dans lequel la condition de sécurité est une position de sécurité d'une grue dans un dépôt, en particulier une position de la grue dans un coin du dépôt et/ou une position de sécurité d'au moins une personne, en particulier une position éloignée du véhicule ferroviaire.

5. Système de sécurité (10) selon les revendications 1 à 4, dans lequel la condition de sécurité est une piste dépourvue d'obstacle et/ou au moins une échelle retirée.

6. Système de sécurité (10) selon les revendications 1 à 5, dans lequel la condition de sécurité est une porte ouverte sur la voie pour véhicules ferroviaires du dépôt et/ou au moins une porte fermée du véhicule ferroviaire et/ou au moins une jupe latérale fermée du véhicule ferroviaire.

7. Appareil (30) destiné à déplacer un élément sabot d'arrêt (20) d'un système de sécurité (10) selon les revendications 1 à 6, l'appareil (30) comprenant
- un élément de base cuboïde (34) présentant la même hauteur qu'un rail (60) et étant fixé à un sol du site de véhicules ferroviaires et fixé parallèlement au rail (60), **caractérisé en ce que** l'appareil comprend en outre
- une plaque coulissante (32) qui porte l'élément sabot d'arrêt (20),
- la plaque coulissante (32) étant portée par au moins un premier vérin pneumatique ou hydraulique (33) dans une direction perpendiculaire au rail (60), et
- au moins un second vérin pneumatique ou hydraulique (35) étant monté sur la plaque coulissante (32) dans une direction parallèle au rail (60) en alignement avec l'élément sabot d'arrêt (20).

8. Appareil (30) selon la revendication 7, dans lequel l'élément sabot d'arrêt (20) est relié à une tige de piston du second vérin (35) par un mécanisme de libération rapide, le mécanisme de libération rapide entre le second vérin (35) et l'élément d'arrêt (20) étant utilisé manuellement pour libérer un piston du second vérin (35) de l'élément sabot d'arrêt (20) coincé sous la roue.

9. Appareil (30) selon la revendication 7 ou 8, comprenant un dispositif de verrouillage électromagnétique (36) fixant le second vérin (35) le long du rail (60).

10. Appareil (30) selon les revendications 7 à 9, dans lequel l'appareil (30) est mobile le long du rail (60) sur une distance prédéfinie et l'appareil (30) est en particulier mobile sur au moins un rail de guidage parallèle au rail (60) de la voie pour véhicules ferroviaires.

11. Procédé de sécurité destiné à un site de véhicules ferroviaires, le site de véhicules ferroviaires comprenant
- au moins une voie pour véhicules ferroviaires, et
- un système de sécurité (10) comprenant au moins un élément sabot d'arrêt (20) pour au moins une roue d'un véhicule ferroviaire, **caractérisé en ce que**
- une condition de sécurité sur le site de véhicules ferroviaires est observée par au moins un capteur (50, 51, 52) du système de sécurité (10) connecté à une unité de commande (40) du système de sécurité (10) ;
- un appareil (30) du système de sécurité (10) commandé par l'unité de commande déplace l'élément sabot d'arrêt (20) sur un rail de la voie pour véhicules ferroviaires en fonction de la condition de sécurité.
